# EUROPÄISCHE PATENTSCHRIFT

(11) **EP 3 721 701 B1**
(45) Veröffentlichungstag und Bekanntmachung des Hinweises auf die Patenterteilung: **09.03.2022**
(21) Anmeldenummer: 20151441.1
(22) Anmeldetag: 13.01.2020
(51) Int. Cl.: A01F 15/08

(54) **BALLENPRESSE**
BALLER
PRESSE À BALLES

(30) Priorität: 10.04.2019 DE 102019109474
(43) Veröffentlichungstag der Anmeldung: 14.10.2020
(73) Patentinhaber: Usines CLAAS France S.A.S, 57140 St. Rémy / Woippy (FR)
(72) Erfinder: Lallement, Jérôme, 57420 Solgne (FR); Altmayer, Marc, 57320 Alzing (FR)
(74) Vertreter: CLAAS Gruppe

(56) Entgegenhaltungen:
- EP-A1- 2 636 298
- US-A- 2 596 872
- US-A- 5 735 199

## Beschreibung

Die vorliegende Erfindung betrifft eine Ballenpresse gemäß dem Oberbegriff des Anspruches 1.

Ballenpressen werden in der Landwirtschaft dazu eingesetzt beispielsweise im Schwad abgelegtes halmartiges Erntegut wie Stroh, Heu, Gras oder dergleichen aufzunehmen und zu Ballen zu pressen. Hierzu verfügen Ballenpressen über verschiedene Arbeitsaggregate, die der erforderlichen Förderung und/oder Verarbeitung des Ernteguts dienen. Die Arbeitsaggregate stehen üblicherweise mit einem zentralen Antriebsstrang der Ballenpresse in Antriebsverbindung und werden üblicherweise von einem Schlepper, an den die Ballenpresse angehängt ist, angetrieben.

Aus der US 4,735,199 A, und der DE 10 2007 036293 A1 sind Ballenpressen bekannt. Aus der EP 3003007 A1 sind Ballenpressen gemäß dem Oberbegriff des Anspruches 1 bekannt. Eine Ballenpresse umfasst dabei eine Presskammer, in der ein Presskolben zur Verdichtung von Erntegut zu einem Ballen oszillierend bewegbar ist. Eine der Presskammer vorgeordnete Vorkammer weist einen Einlaufbereich, in den von einer Aufnahmevorrichtung, wie einer Pick-Up, aufgenommenes Erntegut eintritt, sowie einen Auslaufbereich, der in die Presskammer einmündet, auf. In der Vorkammer ist ein Raffer zwischen einer Erntegut in der Vorkammer verdichtenden Sammelhubbewegung und einer das Erntegut von der Vorkammer in die nachgeordnete Presskammer verlagernden Füllhubbewegung umschaltbar ist. Der Vorkammer kommt die Aufgabe zu, ein möglichst homogenes Paket an Erntegut zu sammeln, bevor dieses von dem Raffer in die Presskammer befördert wird.

In der Presskammer werden die einzelnen Erntegutpakete jeweils durch einen sich oszillierend bewegenden Presskolben gegeneinander gepresst und verdichtet. Mit jedem Hub und jedem Erntegutpaket wächst der Ballen jeweils ungefähr um die Dicke des Erntegutpaketes, wodurch der Ballen in der Presskammer kontinuierlich in eine hintere Richtung der Presse wächst. Ein fertig gepresster und gebundener Ballen wirkt zumindest teilweise noch als Widerlager für die Bildung eines neuen Ballens und wird heckseitig aus der Presse ausgeworfen. Damit die Erntegutpakete und/oder ein Ballen als Widerlager für die Bildung eines Ballens dienen können, ist die Presskammer üblicherweise konisch ausgebildet, wodurch seitlich und/oder in vertikaler Richtung Kräfte auf das Erntegut und/oder den Ballen ausgeübt werden können. Dadurch verjüngt sich der Querschnitt der Presskammer in Richtung der Auswurföffnung der Presskammer am Heck der Presse. Üblicherweise sind bei modernen Pressen, insbesondere Quaderballenpresse, die Seitenwände und die Oberseite verlagerbar ausgestaltet, wodurch der seitlich auf den Ballen wirkende Druck in der Presskammer variiert werden kann. Ziel ist es dabei, je nach Erntegut und Erntebedingungen, möglichst gleichmäßige und maßhaltige Ballen zu erzeugen, damit diese effizient transportiert und gelagert werden können. Hierbei sind die Ecken der Ballen oftmals nicht maßhaltig, da hier aufgrund der variablen Seitenwände und Oberseite keine zuverlässige Formgebung des Ballens erfolgt. Dies kann bei einem anschließenden Transport der Ballen dazu führen, dass die einzelnen Ballen mehr Platz als geplant benötigen und so mehr Fuhren und mehr Lagerplatz notwendig sind.

Es ist daher eine Aufgabe der vorliegenden Erfindung, eine landwirtschaftliche Ballenpresse bereitzustellen, welche eine verbesserte Ballenbildung ermöglicht.

Diese Aufgabe wird durch eine Ballenpresse gemäß den Merkmalen des unabhängigen Anspruches 1 gelöst. Vorteilhafte Weiterbildungen sind Gegenstand der von den unabhängigen Ansprüchen abhängigen Unteransprüche.

Eine landwirtschaftliche Ballenpresse, insbesondere eine Quaderballenpresse, weist zumindest ein Arbeitsaggregat zur Verarbeitung und/oder Förderung von Erntegut, und eine Presskammer auf, wobei die Presskammer zwei einander gegenüberliegende Seitenwände und eine die Presskammer nach oben begrenzende Druckplatte aufweist, wobei zwischen einer Seitenwand und der oberseitigen Druckplatte ein sich zumindest entlang eines Teils der Presskammer erstreckendes Eckprofil angeordnet ist. Gemäß der Erfindung weist das Eckprofil mindestens ein erstes Pressprofil mit einer zur Presskammer hingerichteten ersten Pressfläche zum Zusammenwirken mit dem Erntegut, und einen ersten Einlaufbereich mit einer ersten Einlauffläche auf, wobei die erste Einlauffläche an die erste Pressfläche angrenzt und unter einem Winkel zu dieser ausgebildet ist, wobei ein von der ersten Pressfläche abgewandtes Ende der ersten Einlauffläche weiter von der Presskammer beabstandet ist als die erste Pressfläche.

Das erste Pressprofil erstreckt sich zumindest entlang eines Teils des Eckprofils und/oder der Presskammer. Die erste Einlauffläche des ersten Einlaufbereiches ist derart ausgebildet, dass diese von einem presskolbenseitigen, von der ersten Pressfläche beabstandeten Ende, zu der ersten Pressfläche hin im Wesentlichen konisch zuläuft. Die Einlauffläche kann dabei zwischen ihren beiden Enden zumindest teilweise linear und/oder teilweise gebogen ausgebildet sein. Das Erntegut wird eingangsseitig der Presskammer in diese eingeführt und durch den Presskolben verdichtet. Durch wiederholtes Verdichten nachgeführten erntegutes wird dieses unter anderem entlang eines Eckprofils und mindestens eines Pressprofils zu einem hinteren Ende der Presse befördert. Durch den konisch zulaufenden Einlaufbereich wird das Erntegut dabei besonders im Kantenbereich entlang der Presskammer zunehmend verdichtet. Dies führt zu einem erhöhten Druck im Kantenbereich, welcher eine Formbildung des Ballens im Kantenbereich verbessert. Hierdurch kann eine verbesserte Maßhaltigkeit des fertigen Ballens erreicht werden.

Bevorzugt kann das Eckprofil ein zweites Pressprofil aufweist, welches insbesondere einen zweiten Einlaufbereich mit einer zweiten Einlauffläche aufweist, wobei die zweite Einlauffläche an die zweite Pressfläche angrenzt und unter einem Winkel zu dieser ausgebildet ist, wobei ein von der zweiten Pressfläche abgewandtes Ende der zweiten Einlauffläche weiter von der Presskammer beabstandet ist als die zweite Pressfläche. Der zweite Einlaufbereich und die zweite Einlauffläche können dabei presskolbenseitig an dem Eckprofil und/oder ersten Pressprofil angeordnet sein. Das erste und zweite Pressprofil können im Wesentlichen in einem rechten Winkel zueinander angeordnet sein. Das erste Pressprofil kann im Wesentlichen vertikal ausgebildet sein und das zweite Pressprofil kann im Wesentlichen waagerecht ausgebildet sein. Das zweite Pressprofil kann an oder auf der ersten Pressfläche des ersten Pressprofiles angeordnet sein, wobei sich das zweite Pressprofil insbesondere zumindest entlang eines Teils des Eckprofils, des ersten Pressprofils und/oder der Presskammer erstrecken kann. Durch die benachbarte Anordnung des ersten und zweiten Pressprofils kann das Erntegut besonders im Kantenbereich, insbesondere in einer vertikalen und/oder horizontalen Richtung, besonders stark verdichtet werden, wodurch eine Kantenbildung des Ballens weiter verbessert werden kann.

Vorzugsweise kann mindestens eines der Pressprofile weiter in die Presskammer hineinragen als eine benachbart zu dieser angeordnete Seitenwand und/oder Druckplatte. Dadurch, dass mindestens eines der Pressprofile über eine benachbarte Seitenwand und/oder Druckplatte hinaus in die Presskammer hineinragt, kann eine Verdichtung des Erntegutes an den Kanten des Ballens in horizontaler und/oder vertikaler Richtung weiter erhöht werden und die Wirkdauer des Druckes ebenfalls verlängert werden. Hierdurch kann eine verbesserte Kantenbildung des Ballens erreicht werden.

Gemäß einer bevorzugten Ausführungsform können das Eckprofil und mindestens ein Pressprofil, insbesondere in Richtung der Presskammer, verschwenkbar ausgebildet sein. Durch ein zumindest teilweises Verschwenken des Eckprofils und mindestens eines Pressprofils, beispielsweise aus einer Ebene einer angrenzenden Seitenwand und/oder der Druckplatte heraus, ist der auf das Erntegut wirkende Druck im Kantenbereich einstellbar. Dies kann beispielsweise automatisch durch eine Steuervorrichtung in Abhängigkeit des Erntegutes und/oder der Erntebedingungen wie Erntegutfeuchtigkeit erfolgen. Durch die einstellbare Verdichtung des Erntegutes im Kantenbereich können die dort auf das Erntegut wirkenden Presskräfte in horizontaler und/oder vertikaler Richtung eingestellt werden, wodurch eine verbesserte Kantenbildung erreicht werden kann.

In einer weiteren bevorzugten Ausgestaltung ist eine Lagerung des Eckprofils derart ausgebildet, dass das Eckprofil im Wesentlichen parallel zu einer Längsrichtung der Presskammer und/oder um eine, insbesondere vertikale und/oder horizontale Drehachse herum, verschwenkbar ist. Eine parallel Verschwenkung des Eckprofils können die im Kantenbereich über den gesamten Bereich der Pressprofile wirkenden Presskräfte insgesamt eingestellt, beispielsweise erhöht werden. Durch eine Verschwenken, beispielsweise um eine in einem vorderen Bereich der Presskammer, benachbart zu einem Einlaufbereich, angeordneten Drehachse, kann die Zunahme der entlang der Pressprofile wirkenden Presskräfte eingestellt werden. Hierdurch kann beispielsweise in einem hinteren Bereich eine entsprechende Erhöhung des Pressdruckes auf die Kanten erreicht werden, wobei gleichzeitig am Anfang der Presskammer ein störungsfreies Einlaufen des Erntegutes im Einlaufbereich ermöglicht werden kann. Dies führt zu einer verbesserten Ausbildung der Kanten des Ballens.

Gemäß einer bevorzugten Weiterbildung weist mindestens ein Pressprofil in einem hinteren Bereich der Presskammer einen Auslaufbereich mit einer Auslauffläche auf, wobei die Auslauffläche an die Pressfläche angrenzt und unter einem Winkel zu dieser ausgebildet ist, wobei ein von der Pressfläche abgewandtes Ende der Auslauffläche weiter von der Presskammer beabstandet ist als die Pressfläche. Durch die Ausbildung eines Auslaufbereiches endseitig der Presskammer kann eine gezielte Entspannung der Kanten des Ballens in vertikaler und/oder horizontaler Richtung ermöglicht werden. Die hat den Vorteil, dass die Maßhaltigkeit des Ballens unmittelbar erkennbar ist und unter Umständen eine Veränderung an den Eckprofilen und/o der Pressprofilen vorgenommen werden kann, um einen maßhaltigen Ballen zu erzeugen.

Vorzugsweise ist das erste Pressprofil in Form eines, insbesondere hohlen, Profils ausgebildet. Das Profil kann dabei einen L-förmigen, U-förmigen oder geschlossenen Querschnitt aufweisen. Dies hat den Vorteil, das bei geringem Gewicht eine hohe Steifigkeit zum Übertragen hoher Presskräfte ermöglicht werden können.

Besonders bevorzugt ist das zweite Pressprofil in Form einer Auskragung ausgebildet, und erstreckt sich insbesondere entlang eines Teils der ersten Pressfläche. Das zweite Pressprofil kann presskammerseitig an dem ersten Pressprofil, insbesondere an der ersten Pressfläche, angeordnet sein. Die Auskragung kann in Form eines Blechstreifens mit einem rechteckigen, länglichen Querschnitt ausgebildet sein. Hierdurch kann das zweite Pressprofil kostengünstig hergestellt werden.

Weiterhin ist vorteilhafterweise das zweite Pressprofil zumindest teilweise in Form eines, insbesondere hohlen, Profils ausgebildet. Das, insbesondere hohle Profil, kann einen L-förmigen, U-förmigen oder geschlossenen Querschnitt aufweisen. Das zweite Pressprofil kann einstückig mit dem ersten Pressprofil, beispielsweise aus Blech, hergestellt sein. Dies hat den Vorteil, das bei geringem Gewicht eine hohe Steifigkeit zum Übertragen hoher Presskräfte ermöglicht werden können.

In einer vorteilhaften Ausgestaltung weist das erste und/oder zweite Pressprofil Ausnehmungen, insbesondere an einer der Presskammer abgewandten Seite, auf, welche mit einer der Seitenwände und/oder der Druckplatte zusammenwirken. Diese Ausnehmungen können zur Führung einer benachbarten Seitenwand und/oder der Druckplatte dienen, wenn diese ebenfalls individuell zur Optimierung der Ballenformung verstellt werden.

Die vorliegende Erfindung wird nachstehend anhand von in den Zeichnungen dargestellten Ausführungsbeispielen näher erläutert.

### Es zeigen:

- Fig. 1: eine schematische Schnittdarstellung einer Ballenpresse;
- Fig. 2: eine perspektivische Darstellung einer Presskammer und einem Eckprofil mit einem ersten Pressprofil und einem zweiten Pressprofil;
- Fig. 3: eine perspektivische Ansicht der Eckprofils gemäß Fig. 2:
- Fig. 4: eine perspektivische Darstellung der Presskammer mit einem Eckprofil mit einem als Auskragung ausgestalteten zweiten Pressprofil; und
- Fig. 5: eine perspektivische Ansicht des Eckprofils gemäß Fig. 4.

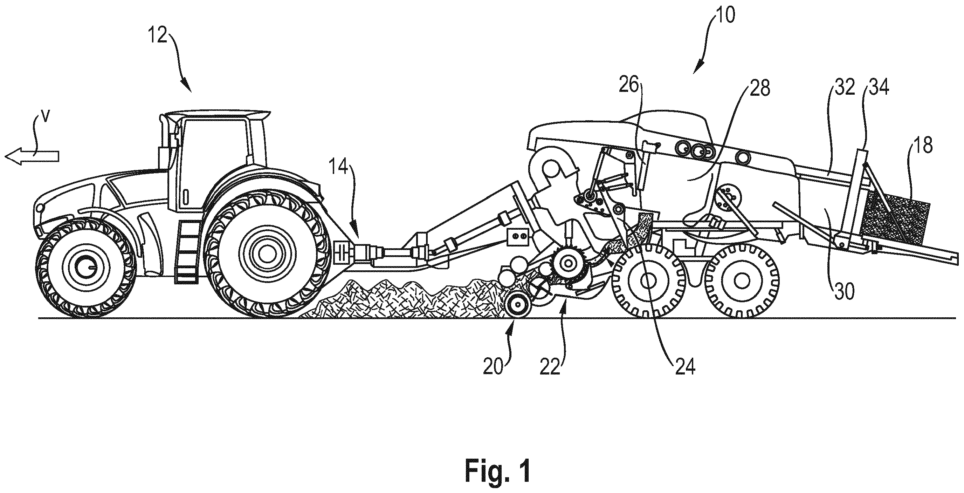

Figur 1 zeigt in einer schematischen Seitenansicht eine Kombination aus einer landwirtschaftlichen Ballenpresse 10 in Form einer Quaderballenpresse und einem Traktor 12, wobei die Ballenpresse 10 von dem Traktor 12 über ein Feld gezogen wird. Der Traktor 12 weist heckseitig einen an sich bekannten Zapfwellenabtrieb 14 auf, über den die Ballenpresse 10 mit mechanischer Antriebsenergie versorgt werden kann. Zur Verarbeitung von Erntegut 16 zu Quaderballen 18 weist die Ballenpresse 10 Arbeitsaggregate wie eine Pickup 20, einen Schneidrotor 22, einen Raffer 24, und einen Presskolben 26 auf, durch welche das Erntegut 16 gefördert und/oder bearbeitet wird. Dabei dient die Pickup 20 dazu, auf dem Feldboden - zumeist in Form eines sogenannten Schwads - liegendes Erntegut 16 aufzunehmen und dieses den nachgelagerten Förder- und/oder Verarbeitungsaggregaten zuzuführen.

Das so aufgenommene Erntegut 16 erreicht nach Verlassen der Pickup 20 den Schneidrotor 22, welcher eine weitere Zerkleinerung des Ernteguts 16 bewirkt. Anschließend gelangt das Erntegut 16 in einen Zuführkanal, in welchem ein Raffer 24 durch periodische Füll- und Sammelhubbewegungen eine Vorverdichtung des Erntegutes 16 und eine Förderung des Ernteguts 16 in die Presskammer 28 durchführt. In der Presskammer 28 ist ein Presskolben 26 translatorisch beweglich gelagert, welcher über einen Presskolbenantrieb in oszillierende Bewegungen versetzt wird. Fertig gepresste Quaderballen 18 werden heckseitig aus der Ballenpresse 10 auf das Feld abgeworfen.

Die Arbeitsaggregate der Ballenpresse 10, insbesondere die Pickup 20, der Schneidrotor 22, der Raffer 24, und der Presskolben 26 werden über einen zentralen Antriebsstrang der Ballenpresse 10 angetrieben. Die Presskammer 28 weist seitlich zwei gegenüberliegend angeordnete Seitenwände 30, sowie eine die Presskammer 28 oberseitig begrenzende Druckplatte 32. Die Seitenwände 30 und die Druckplatte 32 sind an einem Rahmen 34 außenseitig abgestützt und können in Richtung der Presskammer 28, beispielsweise hydraulisch, verschwenkt oder verlagert werden, um die Presskräfte der Seitenwände 30 und/oder der Druckplatte 32 zu verändern, damit während des wiederholten Pressens des Presskolbens 26 ein Ballen 18 geformt werden kann.

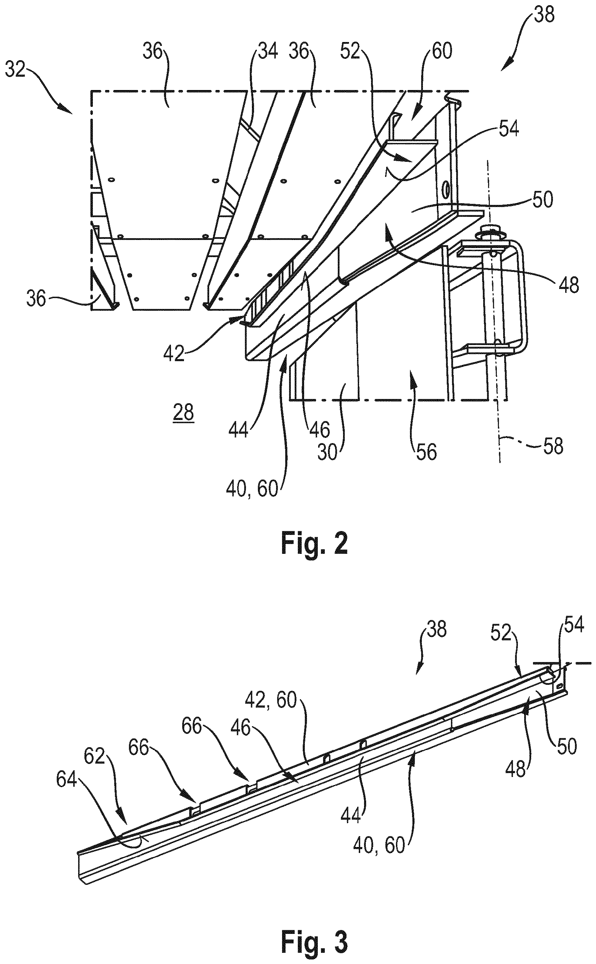

Erfindungsgemäß (Fig. 2) weist die Ballenpresse 10 zwischen einer Seitenwand 30 und der Druckplatte 32 ein Eckprofil 38 auf. Das Eckprofil 38 weist ein erstes Pressprofil 40 mit einer presskammerseitig im Wesentlichen senkrecht angeordneten ersten Pressfläche 44 auf, welches einer Verdichtung des Erntegutes in einem Kantenbereich in im Wesentlichen horizontaler Richtung dient. Das erste Pressprofil 40 ist in Form eines Profils 60 mit einem U-förmigen Querschnitt ausgebildet. Das erste Pressprofil 40 weist an einem presskolbenseitigen Ende (in Fig.2 im Bildvordergrund) einen ersten Einlaufbereich 48 mit einer ersten Einlauffläche 50 auf. Die erste Einlauffläche 50 ist angrenzend an die erste Pressfläche 44 angeordnet und an ihrem presskolbenseitigen Ende weiter von der Presskammer 28 angeordnet als an dem Ende benachbart zu der ersten Pressfläche 44. Hierdurch wird ein im Wesentlichen konischer erster Einlaufbereich 48 ausgebildet, der entlang der Presskammer 28 eine zunehmende Verdichtung des Erntegutes 16 im Kantenbereich ermöglicht.

An der ersten Pressfläche 44 ist ein zweites Pressprofil 42 mit einer zweiten Pressfläche 46 angeordnet, welches sich entlang eines Teils des ersten Pressprofils 40 erstreckt. Dieses ist ebenfalls als Profil 60 aus Blech ausgebildet und weist einen geschlossenen Querschnitt auf. Das zweite Pressprofil 42 weist presskolbenseitig einen zweiten Einlaufbereich 52 mit einer zweiten Einlauffläche 54 auf. Die zweite Einlauffläche 54 bildet dabei ebenso wie die erst Einlauffläche 50 einen konisch zulaufenden zweiten Einlaufbereich 52 aus. Dies dient einer besseren Verdichtung des Erntegutes in im Wesentlichen vertikaler Richtung, um eine bessere Kantenformung und Maßhaltigkeit des Ballens zu ermöglichen. Die Seitenwand 30 ist ein einem vorderen, presskolbenseitigen Bereich um eine Drehachse 58 verschwenkbar gelagert, um seitlich wirkende Presskräfte auf das Erntegut 16 verändern zu können. Die oberseitige Druckplatte 32 ist in Form von mehreren, benachbart zueinander angeordneten Pressbalken 36 zum Verdichten des Erntegutes ausgebildet.

In Fig. 3 ist eine perspektivische Darstellung des Eckprofils 38 aus Figur 2 dargestellt. Das Eckprofil 38 weist ein erstes Pressprofil 40 auf, welches presskammerseitig eine im Wesentlichen senkrechte erste Pressfläche 44 aufweist, durch welche in im Wesentlichen in waagerechter Richtung Presskräfte auf Erntegut in der Presskammer übertragen werden können. Das erste Pressprofil 40 ist dabei in Form eines U-förmigen Profils 60 ausgebildet. Das erste Pressprofil 40 weist an einem Ende ein ersten Einlaufbereich 48 auf, der in einem montierten Zustand des Eckprofils 38 an einem presskolbenseitigen Eingangsbereich der Presskammer (nicht dargestellt) angeordnet ist. Der erste Einlaufbereich 48 weist presskammerseitig eine erste Einlauffläche 50 auf, welche oberflächenbündig in die daran anschließende erste Pressfläche 44 mündet. Hierbei ist die erste Einkauffläche 50 konisch ausgebildet, so dass sie presskolbenseitig weiter von der Presskammer 28 beabstandet ist als pressflächenseitig. An der ersten Pressfläche 44 ist presskammerseitig ein zweites Pressprofil 42 angeordnet, welches in Form eines hohlen Profils 60 ausgebildet ist. Das zweite Pressprofil 42 weist eine im Wesentlichen waagerecht ausgebildete zweite Pressfläche 46 auf, durch welche im Wesentlichen in einer senkrechten Richtung Presskräfte auf Erntegut in der Presskammer ausgeübt werden können, um die Formung der Ballenkanten zu verbessern.

Im Bereich des ersten Einlaufbereiches 48 weist das zweite Pressprofil 42 einen zweiten Einlaufbereich 52 mit einer zweiten Einlauffläche 54 auf. Die zweite Einlauffläche 54 ist dabei - in vertikaler Richtung - ebenfalls konisch zulaufen ausgebildet und geht bündig in die zweite Pressfläche 46 über. An einem dem zweiten Einlaufbereich 52 gegenüberliegenden Ende weist das zweite Pressprofil 42 einen Auslaufbereich 62 auf. Der Auslaufbereich 62 umfasst presskammerseitig eine Auslauffläche 64 auf, welche in Richtung des Presskammerendes in vertikaler Richtung zurückläuft, wodurch in dem Auslaufbereich 62 in vertikaler Richtung auf Kanten eines Ballens 18 wirkende Presskräfte reduziert werden können im Vergleich zu einem Bereich der zweiten Pressfläche 46. In dem zweiten Pressprofil 42 sind presskammerseitig Ausnehmungen 66 ausgebildet, welche beispielsweise mit der Druckplatte (nicht dargestellt) als Führung zusammenwirken können.

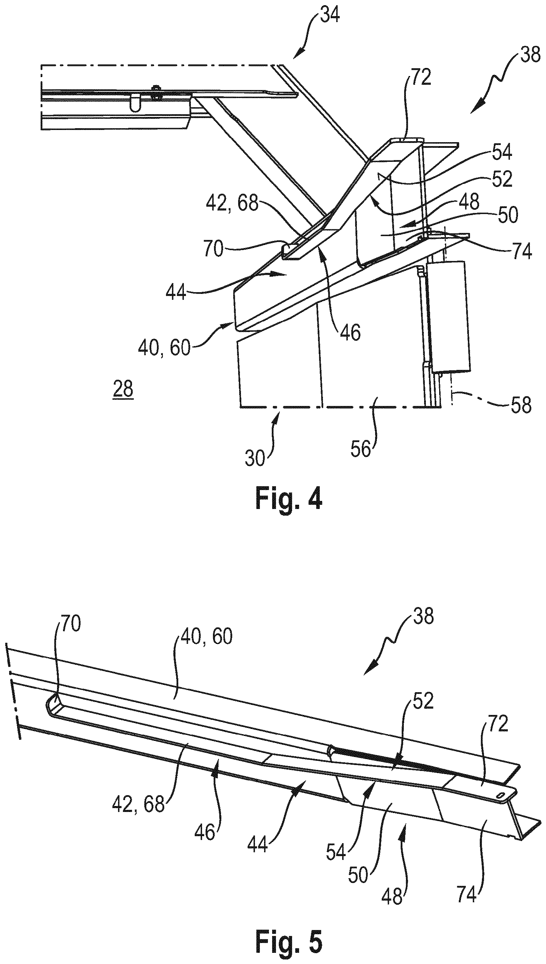

In Fig. 4 ist eine Presskammer 28 mit Blick zu einem Ende der Presskammer 28 dargestellt. Die an einem Rahmen 34 abgestützte Seitenwand 30 weist in einem vorderen, presskolbenseitigen Bereich einen Seiteneinlaufbereich 56 auf, welcher ein Einlaufen des Erntegutes in die Presskammer 28 verbessern kann. Oberhalb der Seitenwand 30 ist ein Eckprofil 38 angeordnet, welches ein erstes und ein zweites Pressprofil 40, 42 aufweist. Das erste Pressprofil 40 ist in Form eines U-förmigen Profils ausgebildet und weist an einem vorderen, presskolbenseitigen Ende einen ersten Einlaufbereich 48 mit einer konisch verlaufenden Einlauffläche 50 auf. Endseitig des ersten Pressprofils 40 weist der erste Einlaufbereich einen geraden Abschnitt 74 auf, welcher im Wesentlichen parallel zur ersten Pressfläche 44 verläuft. Der gerade Abschnitt 74 geht dabei in Förderrichtung des Erntegutes in die erste Einlauffläche 50 über. Presskammerseitig ist an der ersten Pressfläche 50 und der ersten Einlauffläche 50 das zweite Pressprofil 42 angeordnet. Das zweite Pressprofil 42 ist dabei in Form eines Auskragung 68, beispielsweise aus einem Blechstreifen, ausgebildet. Presskolbenseitig weist das zweite Pressprofil 42 einen zweiten Einlaufbereich 52 mit einer zweiten Einlauffläche 54 auf.

Die zweite Einlauffläche 54 (Fig. 5) geht presskolbenseitig, endseitig des zweiten Pressprofils 42 in eine Abflachung 72 über, welche im Wesentlichen parallel zu der zweiten Pressfläche 46 ausgebildet ist, jedoch in vertikale Richtung weiter von der Presskammer beabstandet ist als die zweite Pressfläche 46. An einem dem zweiten Einlaufbereich 52 gegenüberliegenden Ende mündet das zweite Pressprofil 42 in einen Steg 70, welche in Form einer senkrechten Abkantung, weg von der Presskammer, an dem zweiten Pressprofil 42 endseitig ausgebildet ist. Das in Figur 5 dargestellte zweite Pressprofil 42 erstreckt sich nur entlang eines Teils des ersten Pressprofils 40 und endet in etwa mittig der zweiten Pressfläche 46.

**Bezugszeichenliste**

| | | | |
|---|---|---|---|
| 10 | Ballenpresse | 70 | Steg |
| 12 | Traktor | 72 | Abflachung |
| 14 | Zapfwelle | 74 | gerader Abschnitt |
| 16 | Erntegut | 76 | |
| 18 | Quaderballen | | |
| 20 | Pickup | | |
| 22 | Schneidrotor | | |
| 24 | Raffer | | |
| 26 | Presskolben | | |
| 28 | Presskammer | | |
| 30 | Seitenwand | | |
| 32 | Druckplatte | | |
| 34 | Rahmen | | |
| 36 | Pressbalken | | |
| 38 | Eckprofil | | |
| 40 | erstes Pressprofil | | |
| 42 | zweites Pressprofil | | |
| 44 | erste Pressfläche | | |
| 46 | zweite Pressfläche | | |
| 48 | erster Einlaufbereich | | |
| 50 | erste Einlauffläche | | |
| 52 | zweiter Einlaufbereich | | |
| 54 | zweite Einlauffläche | | |
| 56 | Seiteneinlaufbereich | | |
| 58 | Drehachse | | |
| 60 | Profil | | |
| 62 | Auslaufbereich | | |
| 64 | Auslauffläche | | |
| 66 | Ausnehmungen | | |
| 68 | Auskragung | | |

## Patentansprüche

1. Landwirtschaftliche Ballenpresse, insbesondere Quaderballenpresse, mit zumindest einem Arbeitsaggregat (26) zur Verarbeitung und/oder Förderung von Erntegut (16), und einer Presskammer (28), wobei die Presskammer (28) zwei einander gegenüberliegende Seitenwände (30) und eine die Presskammer (28) nach oben begrenzende Druckplatte (32) aufweist, wobei zwischen einer Seitenwand (30) und der oberseitigen Druckplatte (32) ein sich zumindest entlang eines Teils der Presskammer (28) erstreckendes Eckprofil (38) angeordnet ist, wobei das Eckprofil (38) mindestens ein erstes Pressprofil (40) mit einer zur Presskammer (28) hingerichteten ersten Pressfläche (44) zum Zusammenwirken mit dem Erntegut (16) aufweist,
**dadurch gekennzeichnet, dass**
das mindestens eine erste Pressprofil (40) einen ersten Einlaufbereich (48) mit einer ersten Einlauffläche (50) aufweist, wobei die erste Einlauffläche (50) an die erste Pressfläche (44) angrenzt und unter einem Winkel zu dieser ausgebildet ist, wobei ein von der ersten Pressfläche (44) abgewandtes Ende der ersten Einlauffläche (50) weiter von der Presskammer (28) beabstandet ist als die erste Pressfläche (44).

2. Ballenpresse nach Anspruch 1, **dadurch gekennzeichnet, dass** das Eckprofil (38) ein zweites Pressprofil (42) aufweist, welches insbesondere einen zweiten Einlaufbereich (52) mit einer zweiten Einlauffläche (54) aufweist, wobei die zweite Einlauffläche (54) an die zweite Pressfläche (42) angrenzt und unter einem Winkel zu dieser ausgebildet ist, wobei ein von der zweiten Pressfläche (42) abgewandtes Ende der zweiten Einlauffläche (54) weiter von der Presskammer (28) beabstandet ist als die zweite Pressfläche (42).

3. Ballenpresse nach Anspruch 1 oder 2, **dadurch gekennzeichnet, dass** mindestens eines der Pressprofile (40, 42) weiter in die Presskammer (28) hineinragt als eine benachbart zu dieser angeordnete Seitenwand (30) und/oder Druckplatte (32).

4. Ballenpresse nach einem der vorherigen Ansprüche, **dadurch gekennzeichnet, dass** das Eckprofil (38) und mindestens ein Pressprofil (40, 42), insbesondere in Richtung der Presskammer (28), verschwenkbar ausgebildet ist.

5. Ballenpresse nach einem der vorangehenden Ansprüche, **dadurch gekennzeichnet, dass** eine Lagerung des Eckprofils (38) derart ausgebildet ist, dass das Eckprofil (38) im Wesentlichen parallel zu einer Längsrichtung der Presskammer (28) und/oder um eine Drehachse (58) herum, verschwenkbar ist.

6. Ballenpresse nach einem der vorangehenden Ansprüche, **dadurch gekennzeichnet, dass** mindestens ein Pressprofil (40, 42) in einem hinteren Bereich der Presskammer (28) einen Auslaufbereich (62) mit einer Auslauffläche (64) aufweist, wobei die Auslauffläche (64) an die Pressfläche (44, 46) angrenzt und unter einem Winkel zu dieser ausgebildet ist, wobei ein von der Pressfläche (44, 46) abgewandtes Ende der Auslauffläche (64) weiter von der Presskammer (28) beabstandet ist als die Pressfläche (44, 46).

7. Ballenpresse nach einem der vorangehenden Ansprüche, **dadurch gekennzeichnet, dass** das erste Pressprofil (40) in Form eines, insbesondere hohlen, Profils (60) ausgebildet ist.

8. Ballenpresse nach einem der vorangegangenen Ansprüchen, **dadurch gekennzeichnet, dass** das zweite Pressprofil (42) in Form einer Auskragung (68) ausgebildet ist, und sich insbesondere entlang eines Teils der ersten Pressfläche (44) erstreckt.

9. Ballenpresse nach einem der vorangehenden Ansprüche, **dadurch gekennzeichnet, dass** das zweite Pressprofil (42) zumindest teilweise in Form eines, insbesondere hohlen, Profils (60) ausgebildet ist.

10. Ballenpresse nach einem der vorangehenden Ansprüche, **dadurch gekennzeichnet, dass** das erste und/oder zweite Pressprofil (40, 42) Ausnehmungen aufweist, welche mit einer der Seitenwände (30) und/oder der Druckplatte (32) zusammenwirken.

## Claims

1. An agricultural bale press, in particular a square bale press, comprising at least one working assembly (26) for processing and/or conveying crop material (16) and a pressing chamber (28), wherein the pressing chamber (28) has two mutually opposite side walls (30) and a pressure plate (32) upwardly delimiting the pressing chamber (28), wherein arranged between a side wall (30) and the top-side pressure plate (32) is a corner profile (38) extending at least along a part of the pressing chamber (28), wherein the corner profile (38) has at least one first pressing profile (40) having a first pressing surface (44) directed towards the pressing chamber (28) for cooperating with the crop material (16),
**characterised in that**
the at least one first pressing profile (40) has a first entry region (48) with a first entry surface (50), wherein the first entry surface (50) adjoins the first pressing surface (44) and is at an angle with respect thereto, wherein an end of the first entry surface (50), that faces away from the first pressing surface (44), is further spaced from the pressing chamber (28) than the first pressing surface (44).

2. A bale press according to claim 1 **characterised in that** the corner profile (38) has a second pressing profile (42) having in particular a second entry region (52) with a second entry surface (54), wherein the second entry surface (54) adjoins the second pressing surface (42) and is at an angle with respect thereto, wherein an end of the second entry surface (54), that faces away from the second pressing surface (42), is further spaced from the pressing chamber (28) than the second pressing surface (42).

3. A bale press according to claim 1 or claim 2 **characterised in that** at least one of the pressing profiles (40, 42) projects into the pressing chamber (28) further than a side wall (30) and/or pressure plate (32) arranged adjacent to the pressing chamber.

4. A bale press according to one of the preceding claims **characterised in that** the corner profile (38) and at least one pressing profile (40, 42) is pivotable, in particular in the direction of the pressing chamber (28).

5. A bale press according to one of the preceding claims **characterised in that** a mounting of the corner profile (38) is of such a configuration that the corner profile (38) is pivotable substantially parallel to a longitudinal direction of the pressing chamber (28) and/or around an axis of rotation (58).

6. A bale press according to one of the preceding claims **characterised in that** at least one pressing profile (40, 42) in a rear region of the pressing chamber (28) has an exit region (62) having an exit surface (64), wherein the exit surface (64) adjoins the pressing surface (44, 46) and is at an angle with respect thereto, wherein a end of the exit surface (64), that faces away from the pressing surface (44, 46), is spaced further from the pressing chamber (28) than the pressing surface (44, 46).

7. A bale press according to one of the preceding claims **characterised in that** the first pressing profile (40) is in the form of an in particular hollow profile (60).

8. A bale press according to one of the preceding claims **characterised in that** the second pressing profile (42) is in the form of a overhang (68) and extends in particular along a part of the first pressing surface (44).

9. A bale press according to one of the preceding claims **characterised in that** the second pressing profile (42) is at least partially in the form of an in particular hollow profile (60).

10. A bale press according to one of the preceding claims **characterised in that** the first and/or second pressing profile (40, 42) has openings which cooperate with one of the side walls (30) and/or the pressure plate (32).

## Revendications

1. Presse à balles agricole, en particulier presse à balles parallélépipédiques, comprenant au moins un organe de travail (26) pour traiter et/ou pour convoyer du produit récolté (16), et comprenant une chambre de pressage (28), la chambre de pressage (28) comportant deux parois latérales en vis-à-vis (30) et une plaque de pression (32) limitant la chambre de pressage (28) vers le haut, entre une paroi latérale (30) et la plaque de pression supérieure (32) étant disposé un profil d'angle (38) s'étendant au moins le long d'une partie de la chambre de pressage (28), le profil d'angle (38) comportant au moins un premier profil de pressage (40) avec une première surface de pressage (44) orientée vers la chambre de pressage (28) pour coopérer avec le produit récolté (16), **caractérisée en ce que** le au moins un premier profil de pressage (40) comporte une première zone d'entrée (48) comprenant une première surface d'entrée (50), la première surface d'entrée (50) étant adjacente à la première surface de pressage (44) et étant conformée avec un angle par rapport à celle-ci, une extrémité de la première surface d'entrée (50) située à l'opposé de la première surface de pressage (44) étant plus éloignée de la chambre de pressage (28) que la première surface de pressage (44).

2. Presse à balles selon la revendication 1, **caractérisée en ce que** le profil d'angle (38) comporte un second profil de pressage (42) qui comporte en particulier une seconde zone d'entrée (52) comprenant une seconde surface d'entrée (54), la seconde surface d'entrée (54) étant adjacente à la seconde surface de pressage (42) et étant conformée avec un angle par rapport à celle-ci, une extrémité de la seconde surface d'entrée (54) située à l'opposé de la seconde surface de pressage (42) étant plus éloignée de la chambre de pressage (28) que la seconde surface de pressage (42).

3. Presse à balles selon la revendication 1 ou 2, **caractérisée en ce qu'**au moins un des profils de pressage (40, 42) pénètre davantage dans la chambre de pressage (28) qu'une paroi latérale (30) et/ou une plaque de pression (32) disposées au voisinage de celle-ci.

4. Presse à balles selon une des revendications précédentes, **caractérisée en ce que** le profil d'angle (38) et au moins un profil de pressage (40, 42) sont conçus pivotants, en particulier en direction de la chambre de pressage (28).

5. Presse à balles selon une des revendications précédentes, **caractérisée en ce qu'**un montage du profil d'angle (38) est conçu de manière que le profil d'angle (38) est pivotant sensiblement parallèlement à une direction longitudinale de la chambre de pressage (28) et/ou autour d'un axe de rotation (58).

6. Presse à balles selon une des revendications précédentes, **caractérisée en ce qu'**au moins un profil de pressage (40, 42) comporte, dans une zone arrière de la chambre de pressage (28), une zone de sortie (62) comprenant une surface de sortie (64), la surface de sortie (64) étant adjacente à la surface de pressage (44, 46) et étant conformée avec un angle par rapport à celle-ci, une extrémité de la surface de sortie (64) située à l'opposé de la surface de pressage (44, 46) étant plus éloignée de la chambre de pressage (28) que la surface de pressage (44, 46).

7. Presse à balles selon une des revendications précédentes, **caractérisée en ce que** le premier profil de pressage (40) est conçu sous la forme d'un profil (60) en particulier creux.

8. Presse à balles selon une des revendications précédentes, **caractérisée en ce que** le second profil de pressage (42) est conçu sous la forme d'une saillie (68) et s'étend en particulier le long d'une partie de la première surface de pressage (44).

9. Presse à balles selon une des revendications précédentes, **caractérisée en ce que** le second profil de pressage (42) est conçu au moins en partie sous la forme d'un profil (60), en particulier creux.

10. Presse à balles selon une des revendications précédentes, **caractérisée en ce que** le premier et/ou le second profil de pressage (40, 42) comportent des évidements qui coopèrent avec une des parois latérales (30) et/ou avec la plaque de pression (32).
